# EUROPEAN PATENT SPECIFICATION

(11) **EP 3 103 108 B1**
(45) Date of publication and mention of the grant of the patent: **19.12.2018**
(21) Application number: 15746219.3
(22) Date of filing: 04.02.2015
(51) Int. Cl.: G09B 9/052, B60G 17/00, B60G 17/005, B60G 17/016

(54) **METHOD AND SYSTEM FOR DETERMINING A BASIS FOR ASSESSING AND CORRECTING DRIVER BEHAVIOR DURING DRIVING OF A VEHICLE**
VERFAHREN UND SYSTEM ZUR BESTIMMUNG EINER BASIS ZUR BEURTEILUNG UND KORREKTUR DES FAHRVERHALTENS BEIM FAHREN EINES FAHRZEUGS
PROCÉDÉ ET SYSTÈME PERMETTANT DE DÉFINIR UNE BASE POUR L'ÉVALUATION ET LA CORRECTION DU COMPORTEMENT D'UN CONDUCTEUR PENDANT LA CONDUITE D'UN VÉHICULE

(30) Priority: 07.02.2014 SE 1450127
(43) Date of publication of application: 14.12.2016
(73) Proprietor: Scania CV AB, 151 87 Södertälje (SE)
(72) Inventor: ÖBERG, Tobias, S-647 50 Åkers Styckebruk (SE); NORDQVIST, Jesper, S-121 40 Johanneshov (SE)
(74) Representative: Scania CV AB
(86) International application number: PCT/SE2015/050119
(87) International publication number: WO 2015/119561

(56) References cited:
- WO-A1-2013/119252
- US-A1- 2002 038 193
- US-A1- 2006 170 168
- US-A1- 2012 123 646

## Description

### TECHNICAL FIELD OF THE INVENTION

The invention concerns a method for determining a basis for assessing and correcting driver behavior during driving of a vehicle according to the preamble to claim 1. The invention also concerns a system for determining a basis for assessing and correcting driver behavior during driving of a vehicle. The invention also concerns a motor vehicle. The invention also concerns a computer program and a computer program product.

### BACKGROUND

Certain motor vehicles comprise, in addition to a drive axle connected to drive wheels, a tag axle equipped with tag wheels, wherein the tag axle is raisable and lowerable, whereupon the tag axle in its lowered state reduces the axle load on the drive axle, which can be utilized in a heavily laden vehicle and/or when driving on roads/bridges subject to axle load restrictions.

One problem is that such vehicles are sometimes driven with the tag axle lowered when it is not necessary, which results in unnecessary tire wear and increased fuel consumption.

### OBJECT OF THE INVENTION

One object of the present invention is to achieve a method and a system for determining a basis for assessing and correcting driver behavior during driving of a vehicle that enable reduced fuel consumption and decreased tire wear.

### SUMMARY OF THE INVENTION

These and other objects, which are presented in the description below, are achieved by means of a method, a system, a motor vehicle, a computer program and a computer program product of the types described above, and which further exhibit the features specified in the characterizing part of the accompanying independent claims. Preferred embodiments of the method and the system are defined in the accompanying non-independent claims.

According to the invention, these objects are achieved by means of a method for determining a basis for assessing and correcting driver behavior during driving of a vehicle wherein the vehicle comprises at least one axle equipped with wheels and at least one tag axle equipped with tag wheels, wherein the tag axle is raisable and lowerable so as to be brought into and out of engagement with the roadway for said tag wheels, and comprising the step of: determining an axle load on said at least one axle, further comprising the steps of: comparing said determined axle loads to a predetermined axle load as the basis for determining whether the need to have the tag wheels in engagement with the roadway is present; and to continuously determine the time during which said tag wheels are in engagement with the roadway without the need being present. Improved driver behavior is thereby enabled, in that the driver can be informed that the vehicle is being driven with the tag wheels having been brought into engagement with the roadway without the need being present, and then correct the driver behavior so that the vehicle is driven to a greater extent with the tag wheels brought out of engagement with the roadway, which will consequently enable reduced fuel consumption and decreased tire wear. Monitoring the time enables a more accurate determination so that, for example, driving with the tag wheels brought into engagement with the roadway without the need being present for a relatively short time does not result in a poor assessment/poor driver rating. A short time period with the tag wheels in engagement with the roadway does not automatically need to result in a wanted correction of driver behavior or a poor rating. On the contrary, it might be economically advantageous to have the tag wheels in engagement with the roadway during shorter time periods even without the need being present. Such a scenario is, for example, when the vehicle is driven between different loading platforms on the area of a forwarding agency, where loading and unloading is performed at different loading platforms. First raising the tag axle when the vehicle leaves a loading platform after unloading and then lowering the tag axle when arriving at the next loading platform for loading does take time to perform. During this time, the vehicle cannot drive, cannot be loaded and the loading platform will be blocked. Driving with lowered tag axle without need might in this case thus save that much time that it economically seen by a wide margin compensates the increased fuel consumption and the increased tire wear.

According to one embodiment of the method, the determined time during which said tag wheels are in engagement with the roadway without the need being present is used as a basis for said assessment and correction. Improved driver behavior is thereby enabled, in that the driver is assessed for his driver behavior and, if the vehicle is driven with the tag wheels brought into engagement with the roadway without the need being present, the driver is encouraged to correct his driver behavior so that the vehicle is driven to a greater extent with the tag wheels brought out of engagement with the roadway, which consequently enables reduced fuel consumption and decreased tire wear.

According to one embodiment, the method further comprises the step of continuously determining the vehicle velocity during the time during which said tag wheels are in engagement with the roadway without the need being present. Thus monitoring the velocity enables a more accurate assessment so that, for example, driving with the tag wheels brought into engagement with the roadway at low velocity without the need being present at a relatively low velocity, e.g. within a load range in which the vehicle is being driven to another loading dock for loading, does not result in a poor assessment/poor driver rating.

According to one embodiment of the method, the determined velocity during the time during which said tag wheels are in engagement with the roadway without the need being present serves as a basis for said assessment and correction. The driver behavior is hereby improved by means of a more accurate assessment.

According to one embodiment, the method comprises the step of providing an indication to the vehicle driver in the event that the vehicle is being driven with said tag wheels in engagement with the roadway without the need being present for a predetermined length of time. Additionally improved driver behavior is thereby enabled in that the driver is made aware of and can correct faulty behavior while traveling.

According to one embodiment of the method, an indication is provided to the vehicle driver on the condition that the mean velocity of the vehicle has exceeded a predetermined velocity over said length of time. An indication is thus given only when called for, whereupon unnecessary indications are avoided, so that the driver is not disturbed unnecessarily.

According to one embodiment of the method, ambient factors are taken into consideration when determining the need to have said tag wheel in engagement with the roadway without the need being present. The driving of the vehicle with the tag wheels brought into engagement with the roadway is thus not determined unless the need is present with respect to axle weight as poor driver behavior if ambient factors such as bad weather, bad road conditions or the like that still justify driving with the tag wheels brought into engagement with the roadway are determined to be present.

According to one embodiment of the method, said axle consists of a drive axle of the vehicle.

The embodiments of the system exhibit advantages corresponding to those of the corresponding embodiments of the method cited above.

### FIGURE DESCRIPTION

The present invention will be better understood with reference to the following detailed description read in conjunction with the accompanying drawings, in which the same reference designations refer to the same parts throughout the many views, and in which:
Fig. 1 schematically illustrates a motor vehicle according to one embodiment of the invention;
Fig. 2a schematically depicts a system according to one embodiment of the present invention arranged in a motor vehicle;
Figs. 2b and 2c schematically depict various positions of the tag axle tag wheels and the drive axle drive wheels of the motor vehicle;
Fig. 3 schematically depicts a block diagram of a system for determining a basis for assessing and correcting driver behavior during driving of a vehicle according to one embodiment of the present invention;
Fig. 4 schematically depicts a block diagram of a method for determining a basis for assessing and correcting driver behavior during driving of a vehicle according to one embodiment of the present invention; and
Fig. 5 schematically illustrates a computer according to one embodiment of the present invention.

### DESCRIPTION OF EMBODIMENTS

The term "link" refers herein to a communication link, which can be a physical line such as an opto-electronic communication line, or a non-physical line, such as a wireless connection, e.g. a radio or microwave link.

The expression "need to have the tag wheels in engagement with the roadway is present" refers herein to that said need is present when it can be utilized in a heavily laden vehicle and/or when driving on roads/bridges subject to axle load restrictions. Utilizing thus implies hereby that an allowed restriction of the axle load is not exceeded through having the tag axle in the lowered position. In the same way does the expression "tag wheels are in engagement with the roadway without the need being present" relate to that said need is not present if it cannot be utilized in a heavily laden vehicle and/or when driving on roads/bridges subject to axle load restrictions. Cannot using thus implies hereby that an allowed restriction for the axle load will not be exceeded if the tag axle is not in the lowered position.

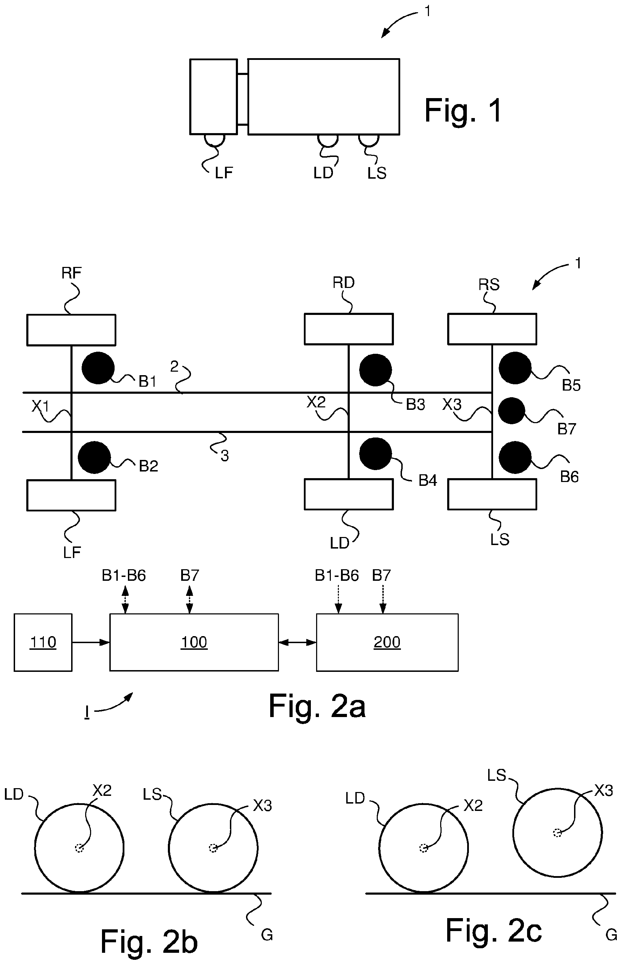

A side view of a vehicle 1 is shown with reference to Figure 1. The exemplary vehicle 1 consists of a heavy vehicle in the form of a goods vehicle. The vehicle can alternatively be a bus or a car. The vehicle consists of a heavy vehicle such as a goods vehicle with a front axle, a rear drive and a rear tag axle, of which the left front wheel LF of the front axle, the left drive wheel LD of the drive axle and the left tag wheel LS of the tag axle are shown.

Fig. 2a schematically depicts a system I for determining a basis for assessing and correcting driver behavior during driving of a vehicle according to one embodiment of the present invention arranged in a motor vehicle 1 with air suspension and comprising an air suspension system, wherein said air suspension system is at least partly contained by said system I for determining a basis for assessing and correcting driver behavior during driving of a vehicle.

The motor vehicle comprises a vehicle frame 2, 3 and a front axle X1 with opposing front wheels RF, LF including tires, a rear drive axle X2 with opposing drive wheels RD, LD including tires, and a rear tag axle X3 with opposing tag wheels RS, LS including tires. The rear drive axle X2 and the rear tag axle X3 constitute a so-called bogie.

The air suspension system of the motor vehicle comprises a bellows configuration B1, B2, B3, B4, B5, B6, B7 comprising a number of bellows units B1-B6 arranged in connection with respective axles X1, X2, X3. Each respective bellows unit B1-B6 is disposed between the vehicle frame 2, 3 and its respective axle, so that the vehicle can be raised and lowered by adjusting the air in the bellows units. Load transfer between drive axle X2 and tag axle X3 is also enabled by adjusting the air in the bellows units. The bellows configuration further comprises a bellows unit B7 arranged in connection to the tag axle X3 for raising and lowering same.

The bellows configuration comprises means for determining the axle load on the axles X1, X2, X3. The system I consequently comprises means for determining the axle load on the axles X1, X2, X3.

The bellows unit s B1 and B2 are arranged in connection to the front axle X1 and comprise means for the determining the axle load on the front axle X1. The bellows units B3 and B4 are arranged in connection to the drive axle X2 and comprise means for determining the drive axle load. The bellows units B5 and B6 are arranged in connection to the tag axle X3 and comprise means for determining the tag axle load.

The system I comprises an air valve configuration 100 according to one embodiment of the present invention. The air valve configuration 100 is connected to the bellows configuration B1, B2, B3, B4, B5, B6, B7 and arranged so as to adjust the air pressure in respective bellows units B1, B2, B3, B4, B5, B6, B7 of the bellows configuration. The bellows unit B7 is arranged so as to raise and lower the tag axle X3 by adjusting the air in the bellows unit B7 from the air valve configuration 100.

The system I further comprises a compressed air source 110 for supplying the air valve configuration 100 with air. According to one embodiment, the air valve configuration 100 further comprises air valve units (not shown) containing valve elements with an air intake connected to a compressed air source, a venting outlet and a supply outlet, plus valve elements for adjusting the air pressure in their respective bellows unit.

The system I comprises an electronic control unit 200 for determining a basis for assessing and correcting driver behavior during driving of a vehicle.

The electronic control unit 200 contains stored information regarding a predetermined axle load, wherein the predetermined axle load comprises a predetermined axle load on the drive axle X2. The predetermined axle load of the drive axle X2 consists, according to one variant, of the permissible axle load on the drive axle X2 during driving of the vehicle with the tag wheels LS, RS out of engagement with the roadway.

The electronic control unit 200 is connected to the bellows unit B7 of the bellows configuration, and arranged so as to receive signals representing data concerning the state of the tag axle X3.

The electronic control unit 200 is connected to the bellows configuration, and arranged so as to receive signals representing data concerning axle loads on the axles, specifically the drive axle load on the drive axle X2.

The electronic control unit 200 is connected to the air valve configuration 100 and arranged so as to send signals to the air valve configuration 100 representing data concerning desired air pressures in the bellows configuration B1-B7.

The electronic control unit 200 is arranged so as to compare said determined drive axle loads to the predetermine axle load as the basis for determining whether there the need to have the tag wheels LS, RS in engagement with the roadway is present.

The electronic control unit 200 is arranged so as to continuously determine times during which said tag wheels LS, RS are in engagement with the roadway without the need being present. The determined time during which said tag wheels LS, RS are in engagement with the roadway without the need being present is arranged so as to be used as a basis for said assessment and correction.

According to this embodiment, the air valve configuration 100 and the bellows unit B7 together constitute a control unit 100, B7 for controlling the state of the tag axle X3, i.e. out of or in disengagement with the roadway for said tag wheels LS, RS of the motor vehicle wherein, according to one variant, the driver controls the state of the tag axle X3 by means of actuating elements (not shown) connected to the control unit 100, B7. The control unit for controlling the state of the tag axle X3 is consequently arranged so as to control the tag axle X3 between a raised state in which the tag wheels LS, RS are distanced from the roadway for the vehicle, so that the load is absorbed by the drive axle X2 with a relatively higher axle load on the drive axle X2, and a lowered state in which the tag wheels LS, RS are brought into contact with the roadway so that the load is distributed between the tag axle X3 and the drive axle X2 with a relative lower axle load on the drive axle X2.

According to this embodiment, the bellows configuration B1-B7 constitutes a means for determining axle loads that comprise an element B1-B6 for determining drive axle loads.

Fig. 2b schematically depicts a lowered state of the tag axle X3, wherein the tag axle tag wheel LS is in engagement with the roadway G so that the drive wheel LD and tag wheel LS are in contact with the roadway G, so that load is distributed between the drive axle X2 and tag axle X3, whereupon the drive axle load is consequently relatively lower.

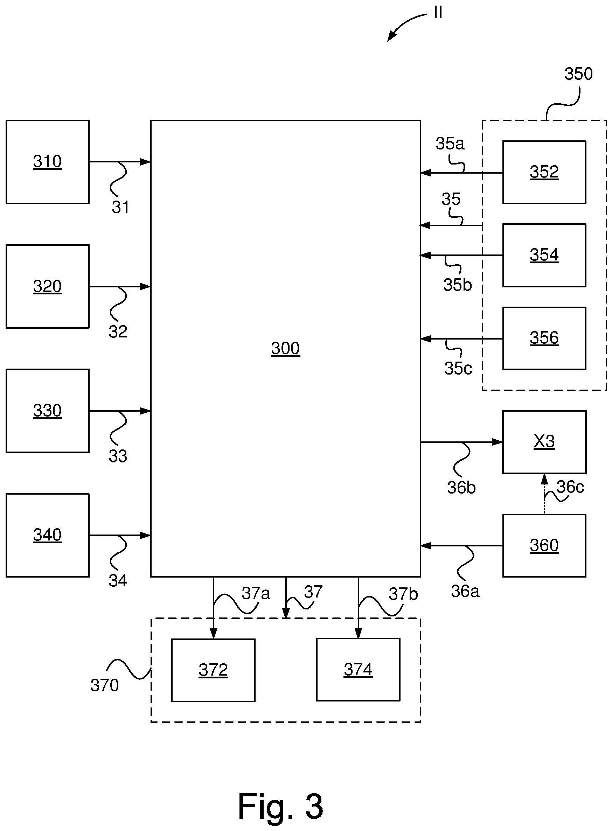

Fig. 2c schematically depicts a raised state of the tag axle X3, wherein the tag axle tag wheel LS is disengaged from the roadway so that only drive wheel LD is in contact with the roadway G, so that the load is absorbed by drive axle X2 and not by tag axle X3, whereupon the drive axle load is consequently relatively higher than when the tag axle X3 is in its lowered state as in Fig. 3a.

Fig. 3 schematically depicts a block diagram of a system II for determining a basis for assessing and correcting driver behavior during driving of a vehicle according to one embodiment of the present invention. The system II is described below for a vehicle with a drive axle equipped with drive wheels LD, RD and a tag axle X3 equipped with tag wheels LS, RS in accordance with the vehicle illustrated in Fig. 2a.

The system II comprises an electronic control unit 300 arranged so as to determine a basis for assessing and correcting driver behavior during driving of a vehicle, wherein the vehicle comprises at least one drive axle X2 equipped with drive wheels LD, RD, e.g. as in Fig. 2a-c, and at least one tag axle X3 equipped with tag wheels LS, RS, e.g. as in Fig. 2a-c.

The system II comprises means 310 for determining axle loads on the drive axle of a vehicle, such as the drive axle X2 of the vehicle in Fig. 2. The means 310 for determining the axle load on the drive axle X2 can consist of any arbitrary elements, such as one or more pressure sensors arranged in connection with the drive axle X2. The means 310 for determining the axle load on the drive axle X2 consist, according to one variant, of means for determining the axle load on the drive axle X2 according to the embodiment described with reference to Fig. 2a.

The system comprises means 320 for determining the state of the tag axle X3 in order to thereby determine whether the tag wheels LS, RS have been brought into engagement with the roadway. The means for determining the state of the tag axle X3 can comprise any arbitrary sensor element for sensing the position of the tag axle, such as a suitable position sensor.

The system II comprises means 300 for comparing axle loads on vehicle axles to a predetermined axle load. The means 300 are arranged so as to compare the determined axle load on the drive axle X2 to a predetermined axle load as a basis for determining whether the need to have the tag wheels LS, RS in engagement with the roadway is present. According to one variant, the means 300 for comparing axle loads are contained by the electronic control unit 300.

The electronic control unit 300 consequently contains stored information concerning a predetermined axle load, wherein the predetermined axle load comprises a predetermined axle load on the drive axle X2. According to one variant, the predetermined axle load on the drive axle X2 consists of the permissible axle load on the drive axle X2 during driving of the vehicle with the tag wheels LS, RS out of engagement with the roadway.

The expression "need" relates hereby to an allowed restriction for the axle load. The value for maximally allowed axle load can relate to a maximally allowed axle load due to constructional reasons. Said value for maximally allowed axle load can relate to a maximally allowed axle load according to registration regulations for the vehicle. Such a value thus is permanently. Said value for maximally allowed axle load can also relate to a temporarily maximally allowed value for the axle load. Such a temporarily maximally allowed value for the axle load can, for example, relate to constructional limitations of a road or a bridge. In addition to an allowed restriction for the axle load, the expression "need" can also relate to additional conditions, such as for example ambient factors. These ambient factors will be described further down.

The electronic control unit 300 is arranged so as to compare said drive axle loads to the predetermined axle load as a basis for determining whether the need to have the tag wheels LS, RS in engagement with the roadway is present. The electronic control unit 300 is arranged so as to determine, in the event that the tag wheels LS, RS have been brought into engagement with the roadway, what the axle load on the drive axle X2 should be in the event that the tag wheels are brought out of engagement with the roadway by raising the tag axle X3.

The system II comprises means 300 for continuously determining the time during which said tag wheels LS, RS are in engagement with the roadway without the need being present. According to one variant, the means 300 for continuously determining the time during which said tag wheels LS, RS are in engagement with the roadway without the need being present are contained by the electronic control unit 300.

The electronic control unit 300 is consequently arranged so as to continuously determine the time during which said tag wheels LS, RS are in engagement with the roadway without the need being present. The determined time during which the tag wheels LS, RS are in engagement with the roadway without the need being present is arranged so as to used as a basis for said assessment and correction.

The system II comprising means 330 for continuously determining the vehicle velocity. The means 330 for continuously determining the vehicle velocity can consist of any arbitrary suitable sensor element. According to one variant, the means 330 for continuously determining the vehicle velocity comprise the vehicle speedometer. The system II comprises means 300, 330 for continuously determining the vehicle velocity during the time when said tag wheels LS, RS are in engagement with the roadway without the need being present.

According to one variant, the system II comprises means 340 for providing an indicating to the vehicle driver in the event that the vehicle is being driven with said tag wheels LS, RS in engagement with the roadway without the need being present over a predetermined period of time. The means for providing an indication to the vehicle driver in the event that the vehicle is being driven with said tag wheels in engagement with the roadway without the need being present during a predetermined period of time comprise a display unit, and/or an audio unit arranged so as to emit an acoustical signal, and/or a light unit arranged so as to emit a blinking or continuous light signal. The means for providing an indication are preferably arranged in proximity to the operator/driver of the vehicle.

The means 340 for providing an indication are arranged so as to provide said indication to the driver on the condition that the average vehicle velocity during said period of time has exceeded a predetermined velocity. The electronic control unit 300 is thus arranged so as to compare the period of time during which the vehicle is driven with the tag wheels in engagement with the roadway without the need being present to a predetermined period of time. The electronic control unit is further arranged so as to compare the average vehicle velocity during said period of time to the predetermined velocity. The means for providing an indication are arranged so as to provide an indication in the event that the period of time exceeds the predetermined period of time and the average vehicle velocity during said period of time has exceeded the predetermined velocity.

The system II comprises means 350 for determining ambient factors for the taking into consideration of ambient factors when determining the need to have the tag wheels in engagement with the roadway without the need being present. The system II thus comprises means 300, 350 for taking ambient factors into consideration when determining the need to have said tag wheels LS, RS in engagement with the roadway without the need being present.

The means 300, 350 for taking ambient factors into consideration comprise the means 350 for determining ambient factors, and the electronic control unit 300. The means 300, 350 for taking ambient factors into consideration are consequently intended to monitor ambient factors that could justify driving the vehicle with the tag wheels in engagement with the roadway for the safe driving of the vehicle, even when it has been determined that, from the standpoint of the axle load on the drive axle, the need to have the tag wheels in engagement with the roadway is not present. Such ambient factors can include the weather conditions such as precipitation, ambient temperature, wind force etc., or the road conditions, road surface or the equivalent.

Consequently, if any of said conditions prevail, a worse driver rating will not be given even though the driver has driven the vehicle with the tag axle lowered so that the tag wheels have been brought into engagement with the roadway.

The means 350 for determining ambient factors comprise means 352 for determining the current weather conditions. The means 352 for determining the current weather conditions comprise weather forecasting means for providing updated weather forecasts for the weather conditions. The means 352 for determining the current weather conditions comprise appropriate sensor elements for determining precipitation, temperature, ambient humidity, wind force and optionally any other weather conditions that could affect the driving of the vehicle.

According to one variant, the means 350 for determining ambient factors comprise navigation means 354 for determining the vehicle position and supplying information about roadways and their permissible axle loads. According to one variant, the navigation means 354 are further arranged so as to provide information about the condition of roadways, e.g. if the road surface consists of gravel, asphalt or another type of road surface.

According to one variant, the means 350 for determining ambient factors comprise camera elements 356 for sensing the surroundings to determine whether the prevailing situation calls for the driving of the vehicle with the tag wheels brought into engagement with the roadway. The prevailing situation can include roadwork, the traffic situation, road conditions etc.

The system II comprises or is connected to an actuating element 360 for controlling the state of the tag axle X3 out of or into engagement with the roadway for said tag wheels. According to one variant, the actuating element is contained in the means for providing an indication. According to an alternative variant, the actuating element 360 consists of a separate unit. An operator/driver can consequently control the tag axle X3 by means of the actuating element 360 based on an indication provided via the means for providing an indication. Said actuating element 360 is preferably arranged in proximity to the operator/driver of the vehicle.

The system II further comprises means 370 for receiving and presenting information concerning the assessment of driver behavior during driving of the vehicle, particularly driver behavior pertaining to the management of the position of the tag axle X3.

The means 370 comprise a vehicle display unit 372 arranged in the instrument cluster in the vehicle for informing the driver of the assessment of the current process, so that the driver can be informed directly of his driver behavior during driving of the vehicle during a driving process and after the driving process.

The means 370 comprise a separate receiving unit 374 for receiving and recording assessments of driver behavior with respect to the position of the tag axle during a driving process. This can include a receiving unit at the fleet owner to make it possible to see the results of the assessment of the driver behavior.

According to one variant, the means 340 for providing an indication are contained by the means 370 for receiving and presenting information concerning assessments and, more specifically, the display unit 372.

The electronic control unit 300 is signal-connected to the means 310 for determining the axle load on the drive axle X2 via a link 31. The electronic control unit 300 is arranged so as to receive, via the link 31, a signal from the means 310 representing axle load data for the current axle load on the drive axle.

The electronic control unit 300 is signal-connected to the means 320 for determining the state of the tag axle X3 via a link 32. The electronic control unit 300 is arranged so as to receive, via the link 32, a signal from the means 320 representing position data for the current state of the tag axle X3.

The electronic control unit 300 is signal-connected to the means 330 for continuously determining the vehicle velocity via a link 33. The electronic control unit 300 is arranged so as to receive, via the link 33, a signal from the means 330 representing velocity data for vehicle velocity.

The electronic control unit 300 is signal-connected to the means 340 for providing an indication to the vehicle driver in the event that the vehicle is being driven with said tag wheels in engagement with the roadway without the need being present via a link 34. The electronic control unit 300 is arranged so as to receive, via the link 34, a signal from the means 340 representing data concerning driving with said tag wheels in engagement with the roadway without the need being present for a predetermined period of time.

The electronic control unit 300 is signal-connected to the means 350 for determining ambient factors for the taking into consideration of ambient factors in determining the need to have the tag wheels in engagement with the roadway without the need being present via a link 35. The electronic control unit 300 is arranged so as to receive, via the link 35, a signal from the means 350 representing data for ambient factors, including one or more of the ambient factors consisting of weather conditions, such as precipitation, ambient temperature, wind force etc., the road conditions, road surface or the equivalent.

The electronic control unit 300 is signal-connected to the means 352 for determining the current weather conditions via a link 35a. The electronic control unit 300 is arranged so as to receive, via the link 35a, a signal from the means 352 representing weather data for the current weather conditions that could affect the driving of the vehicle.

The electronic control unit 300 is signal-connected to the navigation means 354 for determining the vehicle position and providing information about roadways and their permissible axle loads etc via a link 35b. The electronic control unit 300 is arranged so as to receive, via the link 35b, a signal from the navigation means 354 representing vehicle position data and data concerning the permissible axle load in the vicinity of the vehicle.

The electronic control unit 300 is signal-connected to said camera elements 356 for sensing the surroundings to determine whether the prevailing situation calls for the driving of the vehicle with the tag wheels brought into engagement with the roadway via a link 35c. The electronic control unit 300 is arranged so as to receive, via the link 35c, a signal from said camera elements 356 representing ambient data for determining whether the prevailing situation calls for the driving of the vehicle with the tag wheels brought into engagement with the roadway.

According to one variant, the electronic control unit 300 is signal-connected to the actuating element 360 for controlling the state of the tag axle X3 into and out of engagement with the roadway for said tag wheels via a link 36a. The electronic control unit 300 is arranged so as to receive, via the link 36a, a signal from the actuating element 360 representing position data for the desired position of the tag axle X3.

According to one variant, the electronic control unit 300 is signal-connected to the tag axle X3 for controlling the state of the tag axle X3 into and out of engagement with the roadway for said tag wheels via a link 36b. The electronic control unit 300 is arranged so as to send, via the link 36b, a signal to the tag axle X3 representing position data for the desired position of the tag axle X3 in order to control the state of the tag axle X3 into or out of engagement with the roadway for the tag wheels.

According to one variant, the actuating element 360 is signal-connected to the tag axle X3 for controlling the state of the tax axle X3 into and out of engagement with the roadway for said tag wheels via a link 36c. The electronic control unit 300 is arranged so as to send, via the link 36c, a signal to the tax axle X3 representing position data for the desired position of the tag axle X3 in order to control the state of the tag axle X3 into or out of engagement with the roadway for the tag wheels.

According to one variant (not shown), the actuating element 360 is signal-connected to a separate control unit for controlling the state of the tag axle.

The electronic control unit 300 is signal-connected to the means 370 for receiving and presenting information concerning the assessment of driver behavior during driving of the vehicle via a link 37. The electronic control unit 300 is arranged so as to send, via the link 37, a signal to the means 370 representing assessment data.

The electronic control unit 300 is signal-connected to the vehicle display unit 372 via a link 37. The electronic control unit 300 is arranged so as to send, via the link 37a, a signal to the vehicle display unit 372 representing assessment data for assessing the current process so that the driver can be informed directly of his driver behavior during driving of the vehicle during a driving process and after the driving process.

The electronic control unit 300 is signal-connected to the receiving unit 374 for receiving and recording assessments of driver behavior with respect to the management of the state of the tag axle during a driving process via a link 37b. The electronic control unit 300 is arranged so as to send, via the link 37b, a signal to the receiving unit 374 representing assessment data so that, for example, a fleet owner can see the results of the assessment of the driver behavior.

The electronic control unit 300 is arranged so as to process said drive axle load data and data for a predetermined axle load by comparing said data and consequently comparing the determined drive axle load to the predetermined axle load as the basis for determining whether the need to have the tag wheels LS, RS in engagement with the roadway is present.

The electronic control unit 300 is arranged so as to process said position data so as to determine the current state of the tag axle X3.

The electronic control unit 300 is arranged so as to continuously determine, based on the state of the tag axle and the need to have the tag wheels in engagement, the time during which said tag wheels LS, RS are in engagement with the roadway without the need being present. The electronic control unit is arranged so as to determine assessment data based on the determined time during which the tag wheels LS, RS are in engagement with the roadway without the need being present, whereupon the determined time during which the tag wheels LS, RS are engagement with the roadway without the need being present is consequently arranged so as to be used as a basis for assessment and correction.

The electronic control unit 300 is arranged so as to process said velocity data in order to determine the vehicle velocity during the time during which said tag wheels are in engagement with the roadway without the need being present. The electronic control unit is arranged so as to determine assessment data based on the determined time during which the tag wheels LS, RS are in engagement with the roadway without the need being present, whereupon the driver behavior is assessed as being worse if the average vehicle velocity during said period of time has exceeded a predetermined velocity. The determined velocity during the time during which said tag wheels are in engagement with the roadway without the need being present is consequently also used as a basis for said assessment and correction.

The electronic control unit 300 is arranged so as to process said data for ambient factors, including said weather data and/or said vehicle position data/data concerning permissible axle loads in the vicinity of the vehicle and/or said ambient data, in determining said assessment data. The electronic control unit is arranged so as to determine assessment data based on the determined time during which the tag wheels LS, RS are in engagement with the roadway without the need being present while taking into consideration ambient factors, whereupon the driver behavior is assessed as being worse unless ambient factors call for the driving of the vehicle with the tag wheels in engagement with the roadway.

The electronic control unit 300 is arranged so as to send signals to the means 370 for receiving and presenting information concerning the assessment of the driver behavior during driving of the vehicle representing assessment data determined by means of the electronic control unit 300 as described above.

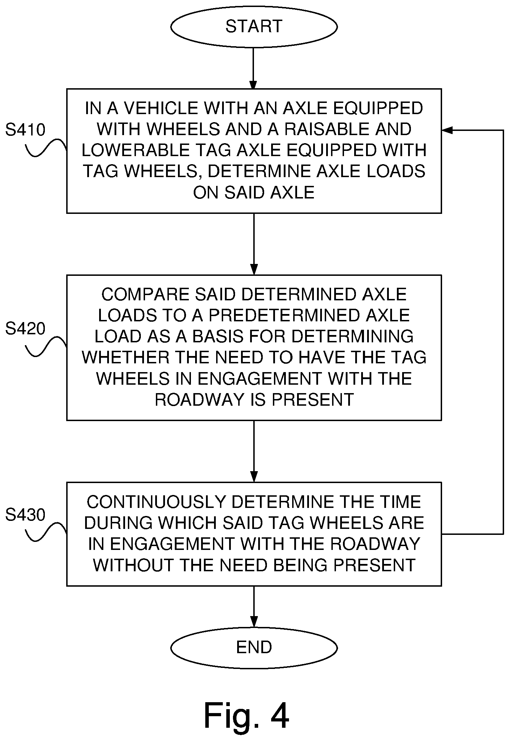

Fig. 4 schematically shows a block diagram of a method for determining a basis for assessing and correcting driver behavior during driving of a vehicle according to one embodiment of the present invention.

According to one embodiment, the method for determining a basis for assessing and correcting driver behavior during driving of a vehicle comprises a first step S410. Axle loads for at least one axle X2 are determined in this step.

According to one embodiment, the method for determining a basis for assessing and correcting driver behavior during driving of a vehicle comprises a second step S420. In this step, said axle loads are compared to a predetermined axle load as the basis for determining whether the need to have the tag wheels in engagement with the roadway is present.

According to one embodiment, the method for determining a basis for assessing and correcting driver behavior during driving of a vehicle comprises a third step S430. The time during which said tag wheels are in engagement with the roadway without the need being present is determined continuously in this step.

The vehicle described above in connection with Figs. 1 and 2a has a front axle X1, a drive axle X2 and a tag axle X3. However, the invention is applicable to any arbitrary vehicle that is equipped with multi-wheel drive and has a tag axle, e.g. four-wheel drive with a front and rear drive axle; two front axles, a drive axle and a tag axle; or vehicles with additional wheel axles, such as ten or twelve wheel axles with one or more driving axles; vehicles with more than one tag axle. The bogie with drive axle X2 and raisable and lowerable tag axle X3 has been described above. According to one variant, the axle X3 could be a non-driving axle, e.g. if the front axle X1 consists of a driving axle. The axle load on the non-driving X2 is thus determined in accordance with the present invention.

An air suspension system has been described above in connection with Fig. 2, which system comprises axle load-determining elements for determining axle loads such as drive axle loads for the vehicle, and vehicle weight-determining elements. The vehicle can alternatively have any arbitrary suspension system.

According to one variant, the suspension system consists of a spring suspension system wherein, according to one variant, said spring suspension system comprises said means for determining axle loads 310.

The means for determining axle loads on the drive axle X2 can consist of any arbitrary means, such as one or more pressure sensors arranged in connection to the drive axle X2.

According to one variant, one or more drive axles are also raisable and lowerable, whereupon the drive power is disconnected when such an axle is raised.

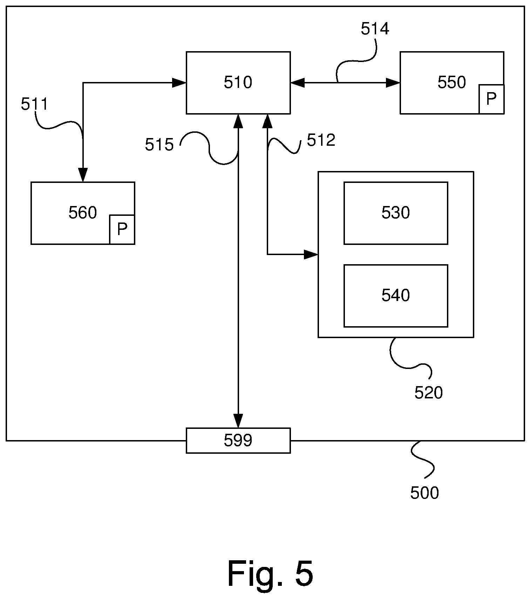

A diagram of one embodiment of a device 500 is shown with reference to Fig. 5. In one embodiment, the control units 200; 300 described with reference to Figs. 2a and Fig. 3 can comprise the device 500. The device 500 comprises a non-volatile memory 520, a data-processing unit 510 and a read/write memory 550. The non-volatile memory 520 has a first memory part 530 in which a computer program, such as an operating system, is stored for controlling the function of the device 500. The device 500 further comprises a bus controller, a serial communication port, I/O elements, and A/D converter, a time and date input and transfer unit, an event counter and an interrupt controller (not shown). The non-volatile memory 520 also has a second memory part 540.

A computer program P is provided that contains routines for determining a basis for assessing and correcting driver behavior during driving of a vehicle according to the innovative method. The program P contains routines for determining axle loads for said at least one axle. The program P contains routines for comparing said determined axle loads to a predetermined axle load as a basis for determining whether the need to have the tag wheels in engagement with the roadway is present. The program P contains routines for continuously determining times during which said tag wheels are in engagement with the roadway without the need being present. The program P can be stored in executable fashion or in compressed fashion in a memory 560 and/or in a read/write memory 550.

When it is stated that the data-processing unit 510 performs a given function, it is to be understood that the data-processing unit 510 executes a certain part of the program that is stored in the memory 560, or a certain part of the program that is stored in the read/write memory 550.

The data-processing unit 510 can communicate with a data port 599 via a data bus 515. The non-volatile memory 520 is intended to for communication with the data-processing unit via a data bus 512. The separate memory 560 is intended to communicate with the data-processing unit 510 via a data bus 511. The read/write memory 550 is arranged so as to communicate with the data-processing unit 510 via a data bus 514. For example, the links connected to the control units 200; 300 can be connected to the data port 599.

When data are received at the data port 599, they are stored temporarily in the second memory part 540. Once received input data have been stored, the data-processing unit 510 is arranged so as to execute code in a manner as described above. The signals received at the data port 599 can be used by the device 500 to determine axle loads for said at least one axle. The signals received at the data port 599 can be used by the device 500 to compare said determined axle loads to a predetermined axle load as the basis for determining whether the need to have the tag wheels in engagement with the roadway is present. The signals received at the data port 599 can be used by the device 500 to continuously determine the time during which said tag wheels are in engagement with the roadway without the need being present.

Parts of the methods described herein can be performed by the device 500 with the help of the data-processing unit 510, which runs the program stored in the memory 560 or the read/write memory. The methods described herein are executed when the device 500 runs the program.

## Claims

1. A method for determining a basis for assessing and correcting driver behavior during driving of a vehicle, wherein the vehicle comprises at least one axle (X2) equipped with wheels (LD, RD) and at least one tag axle (X3) equipped with tag wheels (LS, RS), wherein the tag axle is raisable and lowerable in order to be brought out of and into engagement with the roadway for said tag wheels, comprising the step of:
- determining (S410) axle loads for said at least one axle (X2),
**characterized by** the steps of:
- comparing (S420) said determined axle loads to a predetermined axle load as a basis for determining whether the need to have the tag wheels (LS, RS) in engagement with the roadway is present, wherein the need relates to a permissible restriction for axle load; and
- continuously determining (S430) the time during which said tag wheels (LS, RS) are in engagement with the roadway without the need being present.

2. A method according to claim 1, wherein the determined time during which said tag wheels (LS, RS) are in engagement with the roadway without the need being present is used as a basis for said assessment and correction.

3. A method according to claim1 or 2, further comprising the step of continuously determining the vehicle velocity during the time during which said tag wheels (LS, RS) are in engagement with the roadway without the need being present.

4. A method according to claim 3, wherein said determined velocity during the time during which said tag wheels (LS, RS) are in engagement with the roadway without the need being present is used as a basis for said assessment and correction.

5. A method according to any of claims 1-4, comprising the step of providing an indication to the vehicle driver in the event that the vehicle is being driven with said tag wheels in engagement with the roadway without the need being present for a predetermined period of time.

6. A method according to claim 5, wherein said indication for the vehicle driver is provided assuming that the average vehicle velocity during said period of time has exceeded a predetermined velocity.

7. A method according to any of claims 1-6, wherein consideration is given to ambient factors in assessing the need to have said tag wheels in engagement with the roadway without the need being present.

8. A method according to any of claims 1-7, wherein said axle (X2) consists of a drive axle (X2) of the vehicle.

9. A system (I; II) for determining a basis for assessing and correcting driver behavior during driving of a vehicle, wherein the vehicle comprises at least one axle (X2) equipped with wheels (LS, RS) and at least one tag axle (X3) equipped with tag wheels (LS, RS), wherein the tag axle is raisable and lowerable in order to be brought out of and into engagement with the roadway for said tag wheels, comprising means (310) for determining axle loads for said at least one axle (X2), **characterized by** means (300) for comparing said determined axle loads to a predetermined axle load as a basis for determining whether the need to have the tag wheels (LS, RS) in engagement with the roadway is present, wherein the need relates to a permissible restriction for axle load; and means (300) for continuously determining the time during which said tag wheels are in engagement with the roadway without the need being present.

10. A system according to claim 9, wherein the determined time during which said tag wheels (LS, RS) are in engagement with the roadway without the need being present is arranged so as to be used as a basis for said assessment and correction.

11. A system according to claim 9 or 10, further comprising means (300, 330) for continuously determining the vehicle velocity during the time during which said tag wheels (LS, RS) are in engagement with the roadway without the need being present.

12. A system according to claim 11, wherein said determined velocity during the time during which said tag wheels are in engagement with the roadway without the need being present is arranged so as to be used as a basis for said assessment and correction.

13. A system according to any of claims 9-12, comprising means (340) for providing an indication to the vehicle driver in the event that the vehicle is being driven with said tag wheels (LS, RS) in engagement with the roadway without the need being present for a predetermined period of time.

14. A system according to claim 13, wherein the means (340) for providing an indication are arranged so as to provide said indication to the vehicle driver assuming that the average vehicle velocity during said period of time has exceeded a predetermined velocity.

15. A system according to any of claims 9-14, comprising means (350) for taking ambient factors into consideration in assessing the need to have said tag wheels in engagement with the roadway without the need being present.

16. A system according to any of claims 9-15, wherein said axle (X2) consists of a drive axle (X2) of the vehicle.

17. A motor vehicle comprising a system (I; II) according to any of claims 9-16.

18. A computer program (P) for determining a basis for assessing and correcting driver behavior during driving of a vehicle, an axle (X2) equipped with wheels (LD, RD) and at least one tag axle (X3) equipped with tag wheels (LS, RS), wherein said tag axle is raisable and lowerable in order to be brought out of and into engagement with the roadway for said tag wheels, wherein said computer program (P) contains program code which, when it is run by an electronic control unit (200; 300; 500) or another computer (500) connected to the electronic control unit (200; 300; 500), enables the electronic control unit to perform the steps according to claims 1-8.

19. A computer program product comprising a digital storage medium that stores the computer program according to claim 18.

## Patentansprüche

1. Verfahren zum Bestimmen einer Basis zur Beurteilung und Korrektur des Verhaltens eines Fahrers während des Fahrens eines Fahrzeugs, wobei das Fahrzeug mindestens eine Achse (X2) mit Rädern (LD, RD) und mindestens eine Nachlaufachse (X3) mit Nachlaufrädern (LS, RS) aufweist, wobei die Nachlaufachse anhebbar und absenkbar ist, damit die Nachlaufräder mit der Straße außer Eingriff und in Eingriff gebracht werden, wobei das Verfahren den Schritt aufweist:
- Bestimmen (410) der Achslasten der mindestens einen Achse (X2),
**gekennzeichnet durch** die Schritte:
- Vergleichen (S420) der bestimmten Achslasten mit einer vorgegebenen Achslast als eine Basis zur Bestimmung, ob die Notwendigkeit vorliegt, die Nachlaufräder (LS, RS) mit der Straße in Eingriff zu bringen, wobei die Notwendigkeit mit einer zulässigen Beschränkung der Achslast in Beziehung steht; und
- kontinuierliches Bestimmen (430) der Dauer, während der die Nachlaufräder (LS, RS) mit der Straße in Eingriff stehen, ohne dass die Notwendigkeit dafür vorliegt.

2. Verfahren nach Anspruch 1, wobei die bestimmte Dauer, während der die Nachlaufräder (LS, RS) mit der Straße in Eingriff stehen, ohne dass die Notwendigkeit dafür vorliegt, als eine Basis zur Beurteilung und Korrektur dient.

3. Verfahren nach Anspruch 1 oder 2, das ferner den Schritt der kontinuierlichen Bestimmung der Fahrzeuggeschwindigkeit während der Dauer, während der die Nachlaufräder (LS, RS) mit der Straße in Eingriff stehen, ohne dass die Notwendigkeit dafür vorliegt, aufweist.

4. Verfahren nach Anspruch 3, wobei die bestimmte Geschwindigkeit während der Dauer, während der die Nachlaufräder (LS, RS) mit der Straße in Eingriff stehen, ohne dass die Notwendigkeit dafür vorliegt, als eine Basis zur Beurteilung und Korrektur dient.

5. Verfahren nach einem der Ansprüche 1 bis 4, das den Schritt der Bereitstellung einer Anzeige an den Fahrzeugfahrer in dem Fall aufweist, in dem das Fahrzeug bei mit der Straße in Eingriff stehenden Nachlaufrädern während einer vorgegebenen Dauer gefahren wird, ohne dass die Notwendigkeit dafür vorliegt.

6. Verfahren nach Anspruch 5, wobei die Anzeige für den Fahrzeugfahrer unter der Annahme bereitgestellt wird, dass die durchschnittliche Fahrzeuggeschwindigkeit während der vorgegebenen Dauer eine vorgegebene Geschwindigkeit überschritten hat.

7. Verfahren nach einem der Ansprüche 1 bis 6, wobei Umgebungsfaktoren bei der Beurteilung der Notwendigkeit eines Eingriffs der Nachlaufräder mit der Straße, ohne dass die Notwendigkeit dafür vorliegt, berücksichtigt werden.

8. Verfahren nach einem der Ansprüche 1 bis 7, wobei die Achse (X2) aus einer Antriebsachse (X2) des Fahrzeugs besteht.

9. System (I; II) zur Bestimmung einer Basis zur Beurteilung und Korrektur des Verhaltens eines Fahrers während des Fahrens eines Fahrzeugs, wobei das Fahrzeug mindestens eine Achse (X2) mit Rädern (LD, RD) und mindestens eine Nachlaufachse (X3) mit Nachlaufrädern (LS, RS) aufweist, wobei die Nachlaufachse anhebbar und absenkbar ist, damit die Nachlaufräder mit der Straße außer Eingriff und in Eingriff gebracht werden, wobei das System ein Mittel (310) zur Bestimmung der Achslasten der mindestens einen Achse (X2) aufweist,
**gekennzeichnet durch** ein Mittel (300) zum Vergleichen der bestimmten Achslasten mit einer vorgegebenen Achslast als eine Basis zur Bestimmung, ob die Notwendigkeit vorliegt, die Nachlaufräder (LS, RS) mit der Straße in Eingriff zu bringen, wobei die Notwendigkeit mit einer zulässigen Beschränkung der Achslast in Beziehung steht; und ein Mittel (300) zum kontinuierlichen Bestimmen der Dauer, während der die Nachlaufräder mit der Straße in Eingriff stehen, ohne dass die Notwendigkeit dafür vorliegt.

10. System nach Anspruch 9, wobei die bestimmte Dauer, während der die Nachlaufräder (LS, RS) mit der Straße in Eingriff stehen, ohne dass die Notwendigkeit dafür vorliegt, als eine Basis zur Beurteilung und Korrektur dient.

11. System nach Anspruch 9 oder 10, das ferner Mittel (300, 330) zur kontinuierlichen Bestimmung der Fahrzeuggeschwindigkeit während der Dauer, während der die Nachlaufräder (LS, RS) mit der Straße in Eingriff stehen, ohne dass die Notwendigkeit dafür vorliegt, aufweist.

12. System nach Anspruch 11, wobei die bestimmte Geschwindigkeit während der Dauer, während der die Nachlaufräder (LS, RS) mit der Straße in Eingriff stehen, ohne dass die Notwendigkeit dafür vorliegt, als eine Basis zur Beurteilung und Korrektur dient.

13. System nach einem der Ansprüche 9 bis 12, das ein Mittel (340) zur Bereitstellung einer Anzeige an den Fahrzeugfahrer in dem Fall aufweist, in dem das Fahrzeug bei mit der Straße in Eingriff stehenden Nachlaufrädern während einer vorgegebenen Dauer gefahren wird, ohne dass die Notwendigkeit dafür vorliegt.

14. System nach Anspruch 13, wobei das Mittel (340) zur Bereitstellung einer Anzeige so ausgeführt ist, dass es die Anzeige für den Fahrzeugfahrer unter der Annahme bereitstellt, dass die durchschnittliche Fahrzeuggeschwindigkeit während der vorgegebenen Dauer eine vorgegebene Geschwindigkeit überschritten hat.

15. System nach einem der Ansprüche 9 bis 14, das ein Mittel (350) aufweist, um Umgebungsfaktoren bei der Beurteilung der Notwendigkeit eines Eingriffs der Nachlaufräder mit der Straße zu berücksichtigen, ohne dass die Notwendigkeit dafür vorliegt.

16. System nach einem der Ansprüche 9 bis 15, wobei die Achse (X2) aus einer Antriebsachse (X2) des Fahrzeugs besteht.

17. Kraftfahrzeug, das ein System (I; II) nach einem der Ansprüche 9 bis 16 aufweist.

18. Computerprogramm (P) zur Bestimmung einer Basis zur Beurteilung und Korrektur des Verhaltens eines Fahrers während des Fahrens eines Fahrzeugs, wobei eine Achse (X2) Räder (LD, RD) und mindestens eine Nachlaufachse (X3) Nachlaufräder (LS, RS t) aufweist, wobei die Nachlaufachse anhebbar und absenkbar ist, damit die Nachlaufräder mit der Straße außer Eingriff und in Eingriff gebracht werden, wobei das Computerprogramm (P) einen Programmcode aufweist, der es beim Ablaufen auf einer elektronischen Steuereinheit (200; 300; 500) oder einem anderen mit der elektronischen Steuereinheit (200; 300; 500) verbundenen Computer (500) der elektronischen Steuereinheit ermöglicht, die Schritte nach einem der Ansprüche 1 bis 8 auszuführen.

19. Computerprogrammprodukt, das ein digitales Speichermedium aufweist, das das Computerprogramm nach Anspruch 18 speichert.

## Revendications

1. Procédé permettant de définir une base pour l'évaluation et la correction du comportement d'un conducteur pendant la conduite d'un véhicule, dans lequel le véhicule comprend au moins un essieu (X2) équipé de roues (LD, RD) et au moins un essieu suiveur (X3) équipé de roues suiveuses (LS, RS), dans lequel l'essieu suiveur est relevable et abaissable afin d'être mis en prise avec la chaussée ou séparé de celle-ci pour lesdites roues suiveuses, comprenant l'étape de :
- détermination (S410) des charges d'essieu pour ledit au moins un essieu (X2),
**caractérisé par** les étapes de :
- comparaison (S420) desdites charges d'essieu déterminées à une charge d'essieu prédéterminée comme base pour déterminer s'il est nécessaire que les roues suiveuses (LS, RS) soient en prise avec la chaussée, dans lequel cette nécessité est liée à une restriction admissible sur la charge d'essieu ; et
- la détermination en continu (S430) du temps durant lequel lesdites roues suiveuses (LS, RS) sont en prise avec la chaussée sans que cela soit nécessaire.

2. Procédé selon la revendication 1, dans lequel le temps déterminé durant lequel lesdites roues suiveuses (LS, RS) sont en prise avec la chaussée sans que cela soit nécessaire est utilisé comme base pour ladite évaluation et ladite correction.

3. Procédé selon la revendication 1 ou 2, comprenant en outre l'étape de détermination en continu de la vitesse du véhicule pendant le temps durant lequel lesdites roues suiveuses (LS, RS) sont en prise avec la chaussée sans que cela soit nécessaire.

4. Procédé selon la revendication 3, dans lequel ladite vitesse déterminée pendant le temps durant lequel lesdites roues suiveuses (LS, RS) sont en prise avec la chaussée sans que cela soit nécessaire est utilisée comme base pour ladite évaluation et ladite correction.

5. Procédé selon l'une quelconque des revendications 1 à 4, comprenant l'étape de fourniture d'une indication au conducteur du véhicule en cas de conduite du véhicule avec lesdites roues suiveuses en prise avec la chaussée sans que cela soit nécessaire pendant une période de temps prédéterminée.

6. Procédé selon la revendication 5, dans lequel ladite indication pour le conducteur du véhicule est fournie en supposant que la vitesse moyenne du véhicule pendant ladite période de temps a dépassé une vitesse prédéterminée.

7. Procédé selon l'une quelconque des revendications 1 à 6, dans lequel des facteurs ambiants sont pris en compte pour évaluer la nécessité pour lesdites roues suiveuses d'être en prise avec la chaussée sans que cela soit nécessaire.

8. Procédé selon l'une quelconque des revendications 1 à 7, dans lequel ledit essieu (X2) consiste en un essieu moteur (X2) du véhicule.

9. Système (I ; II) permettant de définir une base pour l'évaluation et la correction du comportement d'un conducteur pendant la conduite d'un véhicule, dans lequel le véhicule comprend au moins un essieu (X2) équipé de roues (LS, RS) et au moins un essieu suiveur (X3) équipé de roues suiveuses (LS, RS), dans lequel l'essieu suiveur est relevable et abaissable afin d'être mis en prise avec la chaussée ou séparé de celle-ci pour lesdites roues suiveuses, comprenant des moyens (310) pour déterminer des charges d'essieu pour ledit au moins un essieu (X2), **caractérisé par** des moyens (300) pour comparer lesdites charges d'essieu déterminées à une charge d'essieu prédéterminée comme base pour déterminer s'il est nécessaire pour les roues suiveuses (LS, RS) d'être en prise avec la chaussée, dans lequel cette nécessité est liée à une restriction admissible sur la charge d'essieu ; et des moyens (300) pour déterminer en continu le temps durant lequel lesdites roues suiveuses sont en prise avec la chaussée sans que cela soit nécessaire.

10. Système selon la revendication 9, dans lequel le temps déterminé durant lequel lesdites roues suiveuses (LS, RS) sont en prise avec la chaussée sans que cela soit nécessaire est conçu de manière à être utilisé comme base pour ladite évaluation et ladite correction.

11. Système selon la revendication 9 ou 10, comprenant en outre des moyens (300, 330) pour déterminer en continu la vitesse du véhicule pendant le temps durant lequel lesdites roues suiveuses (LS, RS) sont en prise avec la chaussée sans que cela soit nécessaire.

12. Système selon la revendication 11, dans lequel ladite vitesse déterminée pendant le temps durant lequel lesdites roues suiveuses sont en prise avec la chaussée sans que cela soit nécessaire est conçue de manière à être utilisée comme base pour ladite évaluation et ladite correction.

13. Système selon l'une quelconque des revendications 9 à 12, comprenant des moyens (340) pour fournir une indication au conducteur du véhicule en cas de conduite du véhicule avec lesdites roues suiveuses (LS, RS) en prise avec la chaussée sans que cela soit nécessaire pendant une période de temps prédéterminée.

14. Système selon la revendication 13, dans lequel les moyens (340) pour fournir une indication sont conçus de manière à fournir ladite indication au conducteur du véhicule en supposant que la vitesse moyenne du véhicule pendant ladite période de temps a dépassé une vitesse prédéterminée.

15. Système selon l'une quelconque des revendications 9 à 14, comprenant des moyens (350) pour prendre en compte des facteurs ambiants pour évaluer la nécessité pour lesdites roues suiveuses d'être en prise avec la chaussée sans que cela soit nécessaire.

16. Système selon l'une quelconque des revendications 9 à 15, dans lequel ledit essieu (X2) consiste en un essieu moteur (X2) du véhicule.

17. Véhicule à moteur comprenant un système (I ; II) selon l'une quelconque des revendications 9 à 16.

18. Programme informatique (P) permettant de définir une base pour l'évaluation et la correction du comportement d'un conducteur pendant la conduite d'un véhicule, d'un essieu (X2) équipé de roues (LD, RD) et d'au moins un essieu suiveur (X3) équipé de roues suiveuses (LS, RS), dans lequel ledit essieu suiveur est relevable et abaissable afin d'être mis en prise avec la chaussée ou séparé de celle-ci pour lesdites roues suiveuses, dans lequel ledit programme informatique (P) contient un code de programme qui, lorsqu'il est exécuté par une unité de commande électronique (200 ; 300 ; 500) ou un autre ordinateur (500) relié à l'unité de commande électronique (200 ; 300 ; 500), permet à l'unité de commande électronique d'effectuer les étapes selon les revendications 1 à 8.

19. Produit de programme informatique comprenant un support de stockage numérique qui mémorise le programme informatique selon la revendication 18.
